# EUROPEAN PATENT APPLICATION

(11) **EP 4 832 525 A1**
(43) Date of publication of application: **28.10.2026**
(21) Application number: 24911160.0
(22) Date of filing: 25.12.2024
(51) Int. Cl.: H04W 8/18

(54) **SENSING SERVICE ORCHESTRATION METHOD AND RELATED APPARATUS**

(30) Priority: 27.12.2023 CN 202311826736
(71) Applicant: Huawei Technologies Co., Ltd., Shenzhen, Guangdong 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); ZHAO, Mingyu, Shenzhen, Guangdong 518129 (CN)
(74) Representative: Maiwald GmbH
(86) International application number: PCT/CN2024/142077
(87) International publication number: WO 2025/140236

(57) **Abstract**

Embodiments of this application provide a sensing service orchestration method. The method includes: An SSCF receives a sensing service request from a sensing service consumer, where the sensing service request includes identity information of the sensing service consumer and an identifier of a target sensing service, and the sensing service request is used to request the SSCF to provide a service of the target sensing service for the sensing service consumer. The SSCF determines one or more candidate terminals, obtains sensing consent information of the candidate terminal, where the sensing consent information indicates whether the candidate terminal is given consent to serve as an SE, and orchestrates a candidate terminal whose sensing consent information indicates consent as an SE of the target sensing service.

## Description

This application claims priority to Chinese Patent Application No. 202311826736.X, filed with the China National Intellectual Property Administration on December 27, 2023 and entitled "SENSING SERVICE ORCHESTRATION METHOD AND RELATED APPARATUS", which is incorporated herein by reference in its entirety.

### TECHNICAL FIELD

This application relates to the communication field, and in particular, to a sensing service orchestration method and a related apparatus.

### BACKGROUND

In a 6G mobile communication system, sensing is not only an optimization or auxiliary tool of a communication network, but also a native capability of a 6G network, and is considered as a data entry for implementing native intelligence of the 6G network.

In a sensing service, a role of a sensing entity (sensing entity, SE) is defined. The sensing entity is a data source that converts a radio signal into raw sensing data through data processing, and can be deployed on a terminal side or a base station side, or can be independently deployed. When terminals serve as SEs, additional overheads of power and communication resources are caused. Consequently, not all terminal users agree to use their own terminals as SEs. However, this is not considered in a current solution.

### SUMMARY

This application provides a sensing service orchestration method and a related apparatus, to improve rationality of sensing service orchestration, and avoid causing additional overheads of a terminal.

A first aspect of this application provides a sensing service orchestration method:
A sensing service control function (sensing service control function, SSCF) receives a sensing service request from a sensing service consumer, where the sensing service request includes identity information of the sensing service consumer and an identifier of a target sensing service, and the sensing service request is used to request the SSCF to provide a service of the target sensing service for the sensing service consumer. The SSCF determines one or more candidate terminals; the SSCF obtains sensing consent information of the candidate terminal, where the sensing consent information indicates whether the candidate terminal is given consent to serve as an SE; and the SSCF orchestrates the candidate terminal whose sensing consent information indicates consent as an SE of the target sensing service.

In this application, during sensing service orchestration, the SSCF can obtain sensing consent information of a terminal, and orchestrate a terminal that is given consent to serve as an SE as the SE, thereby improving rationality of sensing service orchestration, and avoiding causing additional overheads of the terminal.

In another possible implementation, the SSCF sends an identifier of the one or more candidate terminals to a user data management (user data management, UDM); and the SSCF receives sensing consent information of the one or more candidate terminals from the UDM, where the sensing consent information is sent by the candidate terminal to the UDM.

In this application, the UDM is a functional entity related to user data. Therefore, the SSCF directly obtains the sensing consent information from the UDM, thereby ensuring reliability and efficiency of a communication procedure.

In another possible implementation, the SSCF sends the identifier of the one or more candidate terminals to an AMF, so that the AMF sends a query instruction to the one or more candidate terminals, where the query instruction is used for the candidate terminal to respond with the sensing consent information to the AMF. The SSCF receives the sensing consent information of the one or more candidate terminals from the AMF.

In this application, the SSCF obtains the sensing consent information from the terminal by using the AMF, thereby ensuring reliability and efficiency of a communication process.

In another possible implementation, the SSCF further sends an authentication information request to an SSSM, where the authentication information request includes the identity information of the sensing service consumer, and the SSCF receives an authentication information response from the SSSM, where the authentication information response includes an identity authentication result, of the sensing service consumer, determined by the SSSM based on the identity information of the sensing service consumer. If the identity authentication result is a success, the SSCF triggers an operation of determining the one or more candidate terminals.

In this application, before orchestration, the SSCF further performs identity authentication on the sensing service consumer, to avoid unnecessary overheads caused by a user without permission.

In another possible implementation, the authentication information request further includes the identifier of the target sensing service, and the SSSM determines the identity authentication result of the sensing service consumer based on the identity information of the sensing service consumer and the identifier of the target sensing service.

In another possible implementation, the network device is an AF or a NEF.

A second aspect of this application provides a method for requesting to become a sensing entity:
A terminal sends a sensing service information request to an AF, and the terminal receives sensing service information with which the AF responds to the sensing service information request, where the sensing service information includes information about one or more sensing services. The terminal determines a target sensing service in the one or more sensing services based on the sensing service information, and the terminal sends a sensing service participation request to an SSCF, where the sensing service participation request includes an identifier of the target sensing service and sensing consent information, the sensing consent information indicates that the terminal is given consent to serve as a sensing entity (SE), and the sensing service participation request is used for the terminal to request to be orchestrated as an SE of the target sensing service.

In this application, the terminal can obtain the information about the one or more sensing services, select the target sensing service based on the information, and request from the SSCF to serve as the SE of the target sensing service by including the identifier of the target sensing service and the sensing consent information in the sensing service participation request, thereby improving flexibility of participating in the sensing service by the terminal.

In another possible implementation, the terminal further receives response information of the SSCF to the sensing service participation request, where the response information includes configuration information required by the terminal as the SE of the target sensing service.

In this application, after the terminal is orchestrated as the SE of the target sensing service, the terminal receives the configuration information from the SSCF, and performs a corresponding operation based on the configuration information.

In another possible implementation, the terminal displays the sensing service information; the terminal obtains an operation instruction of a user, where the operation instruction is to select the target sensing service; and the terminal determines the target sensing service based on the operation instruction of the user.

A third aspect of this application provides a sensing service orchestration method:
An SSCF receives a sensing service request from a network device, where the sensing service request includes identity information of a sensing service consumer and an identifier of a target sensing service, and the sensing service request is used to request the SSCF to provide a service of the target sensing service for the sensing service consumer. The SSCF receives a sensing service participation request from a terminal, where the sensing service participation request includes the identifier of the target sensing service and sensing consent information, the sensing consent information indicates that the terminal is given consent to serve as an SE, and the sensing service participation request is used for the terminal to request to be orchestrated as an SE of the target sensing service. The SSCF orchestrates the terminal as the SE of the target sensing service.

In another possible implementation, the SSCF sends an authentication information request to an SSSM, where the authentication information request includes the identity information of the sensing service consumer; and the SSCF receives an authentication information response from the SSSM, where the authentication information response includes an identity authentication result, of the sensing service consumer, determined by the SSSM based on the identity information of the sensing service consumer. If the identity authentication result is a success, the SSCF triggers an operation of orchestrating the terminal as the SE of the target sensing service.

In another possible implementation, the authentication information request further includes the identifier of the target sensing service, and the SSSM determines the identity authentication result of the sensing service consumer based on the identity information of the sensing service consumer and the identifier of the target sensing service.

A fourth aspect of this application provides a method for obtaining consent information.

A terminal obtains an operation instruction of a user, where the operation instruction indicates that the terminal is consented to serve as an SE of a sensing service, or indicates that the terminal is not consented to serve as an SE of a sensing service. The terminal sends sensing consent information to a UDM in response to the operation instruction, where corresponding to the operation instruction, the sensing consent information indicates that the terminal is given consent to serve as the SE of the sensing service, or indicates that the terminal is not given consent to serve as the SE of the sensing service.

In another possible implementation, the terminal sends the sensing consent information to an AMF, so that the AMF sends an Nudm_UECM_Update message to the UDM, where the Nudm_UECM_Update message includes the sensing consent information.

In this application, the terminal may send, to the UDM based on the operation instruction of the user, the sensing consent information indicating whether the terminal is given consent to serve as the sensing service, thereby improving flexibility of obtaining, by the UDM, the sensing consent information of the terminal.

A fifth aspect of this application provides an SSCF that includes one or more functional units configured to implement the method according to the first aspect or the third aspect.

A sixth aspect of this application provides a terminal that includes one or more functional units configured to implement the method according to the second aspect or the fourth aspect.

A seventh aspect of this application provides an SSCF that includes a memory and a processor. The memory is configured to store instructions. When the processor executes the instructions in the memory, the SSCF performs the method according to the first aspect or the third aspect.

An eighth aspect of this application provides a terminal that includes a memory and a processor. The memory is configured to store instructions. When the processor executes the instructions in the memory, an SSCF performs the method according to the second aspect or the fourth aspect.

### BRIEF DESCRIPTION OF DRAWINGS

FIG. 1 is a schematic flowchart of writing identity information into an SSSM by a sensing service consumer;
FIG. 2 is a diagram of a system architecture to which this application is applied;
FIG. 3 is a diagram of a DCP according to this application;
FIG. 4 is a diagram of a method for obtaining consent information according to this application;
FIG. 5 is a diagram of a sensing service consent option according to this application;
FIG. 6 is a diagram of another method for obtaining consent information according to this application;
FIG. 7 is a diagram of a method for requesting to become a sensing entity according to this application;
FIG. 8 is a diagram of information about a sensing service according to this application;
FIG. 9 is a diagram of another method for requesting to become a sensing entity according to this application;
FIG. 10a is a diagram of a sensing service orchestration method according to this application;
FIG. 10b is a diagram in which a UDM obtains sensing consent information;
FIG. 11 is another diagram of obtaining sensing consent information according to this application;
FIG. 12A and FIG. 12B are other diagrams of a sensing service orchestration method according to this application;
FIG. 13 is a diagram of an SSCF according to this application;
FIG. 14 is a diagram of a terminal according to this application;
FIG. 15 is a diagram of an SSCF according to this application;
FIG. 16 is a diagram of a terminal according to this application; and
FIG. 17 is a diagram of an SSCF or a terminal according to this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

To facilitate understanding of this application, the following first describes concepts in this application.

Sensing service control function: responsible for receiving capability registration of a sensing entity, implementing sensing service orchestration (including selection of a transmit/receive (Tx/Rx) entity of a sensing signal, delivering configuration information, and establishing a data bearer), managing sensing entity service life cycle, generating charging and incentive events, delivering policy, and managing sensing service continuity. The SSCF communicates with another NF through an SBI interface and registers a service that can be provided by the SSCF with an NRF.

Sensing data processing function (sensing data processing function, SDPF): responsible for processing sensing data, including obtaining sensing measurement data through calculation from raw sensing data and obtaining a sensing result through calculation from the sensing measurement data; data routing and forwarding; policy implementation (Qos, charging, incentive, and security); providing a data exposure interface for a NEF; UE IP management (optional); and data privacy protection, and has an interface with a DCP.

Sensing service subscriber management (sensing service subscriber management, SSSM): responsible for user registration, service subscription and revocation, and third-party user authorization and authentication.

Data communication proxy (data communication proxy, DCP): a data transmission manner. In a core network, sensing data/AI data/IoT data is transmitted through the DCP, and an implementation may be a message queue.

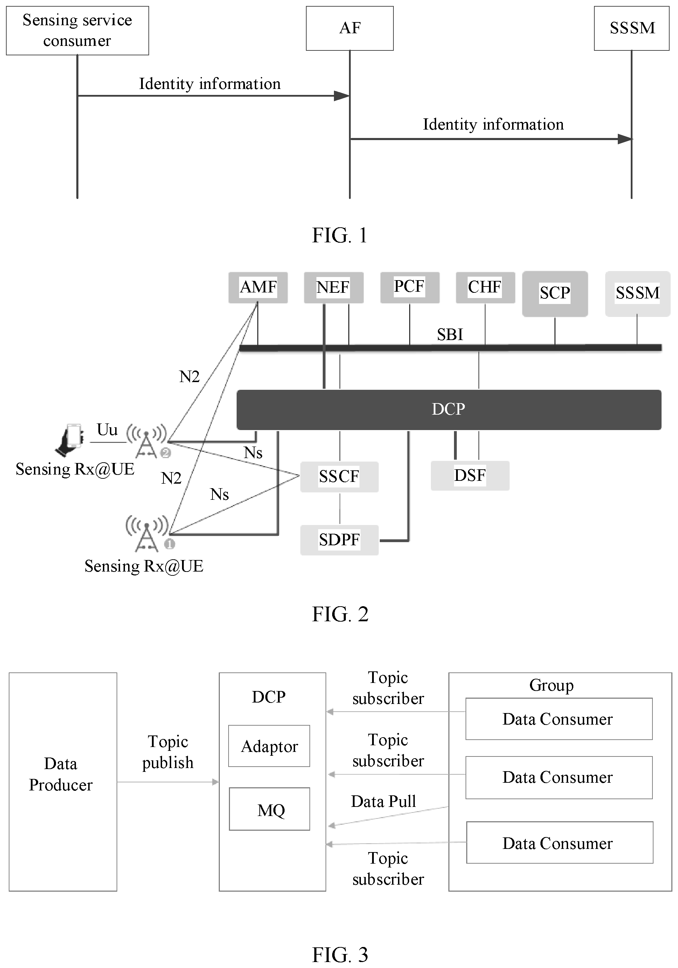

Sensing service consumer: is a user who can obtain a service related to a sensing service. As shown in FIG. 1, an AF provides a registration function related to a sensing service. A sensing service consumer can be registered by using the registration function. In addition, identity information of the sensing service consumer is written into an SSSM by using the AF. Therefore, the SSSM can perform identity authentication on the sensing service consumer based on the information.

This application may be applied to 4G, 5G, or future 6G and a later communication system. A wireless communication system mentioned in this application includes but is not limited to: a narrow band-internet of things (English: Narrow Band-Internet of Things, NB-IoT for short) system, a global system for mobile communications (English: Global System for Mobile Communications, GSM for short) system, an enhanced data rate for GSM evolution (English: Enhanced Data rate for GSM Evolution, EDGE for short) system, a wideband code division multiple access (English: Wideband Code Division Multiple Access, WCDMA for short) system, a code division multiple access 2000 (English: Code Division Multiple Access, CDMA 2000 for short) system, a time division-synchronous code division multiple access (Time Division-Synchronization Code Division Multiple Access, TD-SCDMA) system, a long term evolution (English: Long Term Evolution, LTE for short) system, and a next generation 5G mobile communication system with three major application scenarios, namely, eMBB, URLLC, and eMTC.

This application may be applied to a system architecture shown in FIG. 2, and a new network function, namely, a communication proxy (data communication proxy, DCP), is newly added to the system architecture. A NEF, an SDPF, a DSF, and a base station may directly communicate with the DCP. The base station communicates with an AMF through an N2 interface. In addition, an Ns interface is newly added between the base station and an SSCF for capability registration, orchestration, and configuration. The DCP may serve as a data proxy, and may receive data from a base station 1, wait for pull of the SDPF, and send the data to the SDPF. The SSCF communicates with the AMF based on an SBI. There is a dedicated interface between the SSCF and the SDPF for communication. The SSCF and a RAN may communicate indirectly through the AMF (N2) or directly through the Ns interface. The SDPF is a sensing data processing network element, is directly connected to the SSCF, and is mounted to the DCP. Processed data is exposed to the NEF through the DCP.

As shown in FIG. 3, a DCP includes an adaptor (adaptor) layer and a message queue (message queue, MQ), and supports efficient data distribution. Data Producer sends data to the DCP based on specific Topic. The DCP stores the data at a specific location based on Topic. Topic is equivalent to Key of a hash table. Data Consumer subscribes to data from the DCP based on the Topic. If the data corresponding to the Topic is available, the DCP notifies Consumer. Consumer may obtain the data from the DCP through a pull operation. The DCP may be deployed as an independent NF or may be deployed together with an existing NF.

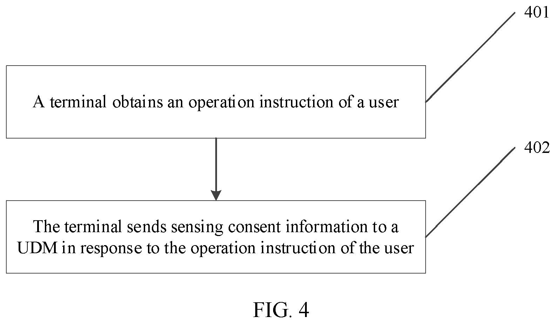

As shown in FIG. 4, a procedure of the method for obtaining consent information in this application is described in detail below.

401: A terminal obtains an operation instruction of a user.

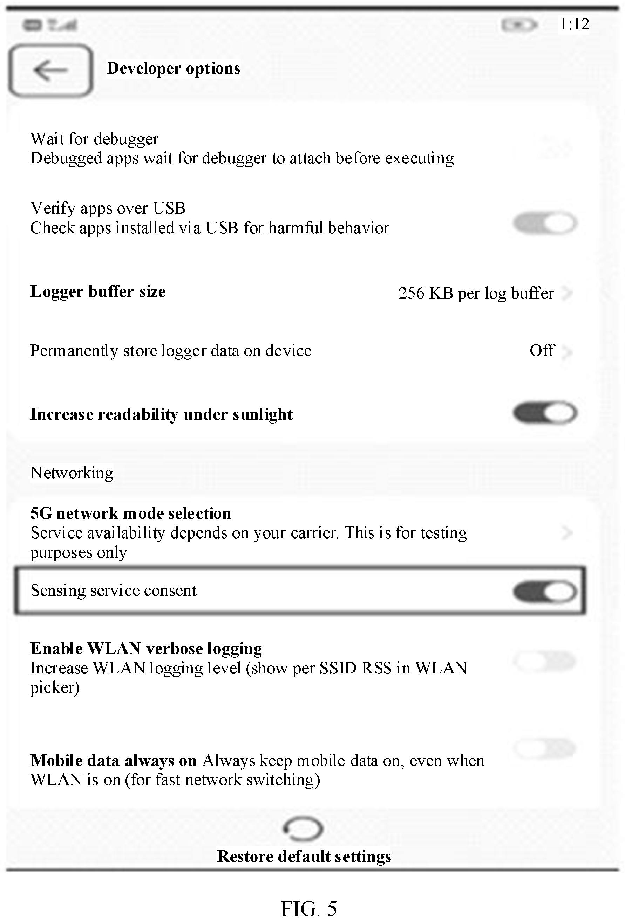

As shown in FIG. 5, a sensing service consent option is newly added to a user interface of the terminal, and the user may indicate, by using the option, whether to consent to the terminal serving as an SE. Alternatively, the user may indicate, by using a voice instruction, whether to consent to the terminal serving as an SE. Correspondingly, the terminal can obtain the operation instruction of the user. The operation instruction may indicate that the terminal is given consent to serve as an SE. For example, the user enables the option. Alternatively, the operation instruction may indicate that the terminal is not given consent to serve as an SE. For example, the user disables the option.

402: The terminal sends sensing consent information to a UDM in response to the operation instruction.

The terminal sends the sensing consent information to the UDM in response to the operation instruction of the user. The sensing consent information indicates whether the terminal is given consent to serve as an SE of a sensing service. In a possible implementation, the sensing consent information includes a flag bit. When the flag bit is 1, it indicates that the terminal is given consent to serve as an SE; or when the flag bit is 0, it indicates that the terminal is not given consent to serve as an SE. If the operation instruction indicates that the terminal is given consent to serve as an SE, the sensing consent information indicates that the terminal is given consent to serve as an SE, that is, the flag bit is 1; or if the operation instruction indicates that the terminal is not given consent to serve as an SE, correspondingly, the sensing consent information indicates that the terminal is not given consent to serve as an SE, that is, the flag bit is 0. After receiving the sensing consent information, the UDM stores the sensing consent information of the terminal locally.

In this application, the terminal may send, to the UDM based on the operation instruction of the user, the sensing consent information indicating whether the terminal is given consent to serve as the sensing service, thereby improving flexibility of obtaining, by the UDM, the sensing consent information of the terminal.

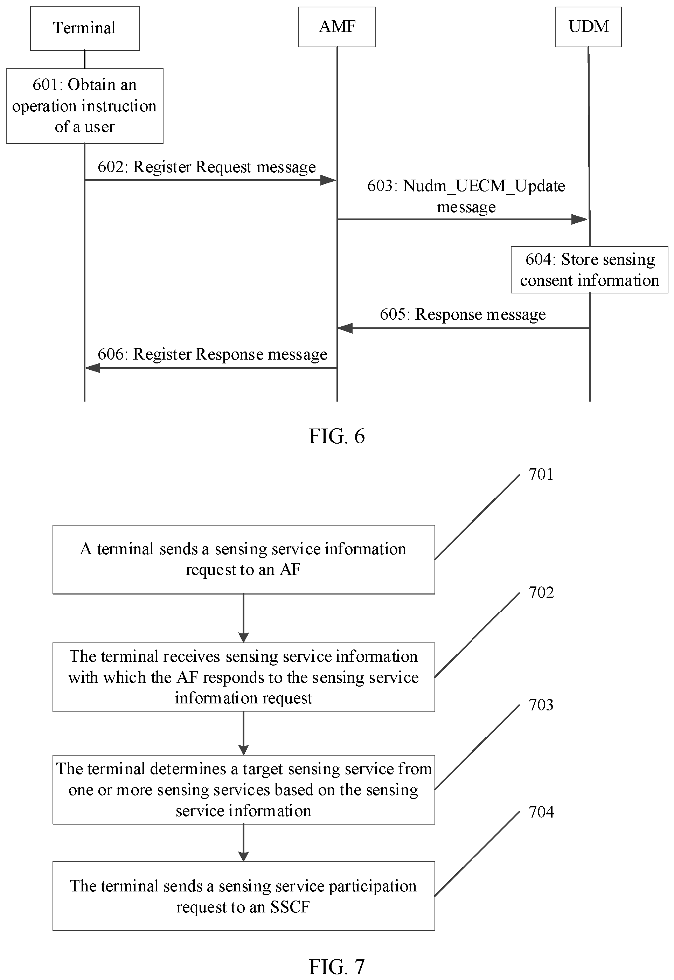

As shown in FIG. 6, another procedure of the method for enabling a sensing service capability in this application is described in detail below.

601: A terminal obtains an operation instruction of a user.

This step is similar to step 401. Details are not described herein again.

602: The terminal sends a Register Request message to an AMF through a RAN.

The Register Request message includes sensing consent information. The sensing consent information is similar to that described above. Details are not described herein again.

603: The AMF sends an Nudm_UECM_Update message to a UDM.

The Nudm_UECM_Update message includes the sensing consent information.

604: The UDM stores the sensing consent information.

The terminal obtains the sensing consent information from the Nudm_UECM_Update message, and stores the sensing consent information locally.

605: The UDM sends a Response message to the AMF.

606: The AMF sends a Register Response message to UE through the RAN.

As shown in FIG. 7, a procedure of the method for requesting to become a sensing entity in this application is described in detail below.

701: A terminal sends a sensing service information request to an AF.

An application provided by the AF is installed on the terminal, and a user may perform an operation on the application to indicate the terminal to send the sensing service information request to the AF. The sensing service information request is used to request sensing service information from the AF.

702: The terminal receives the sensing service information with which the AF responds to the sensing service information request, where the sensing service information includes information about one or more sensing services.

After receiving the sensing service information request, the AF sends the sensing service information to the terminal. The sensing service information includes the information about the one or more sensing services. For example, the information about the sensing service includes an identifier of the sensing service, and further includes one or more of an estimated time, an estimated incentive, an estimated start time, a sensing entity requirement, and an already-worked time of the sensing service. The identifier of the sensing service is, for example, intruder detection in smart home, UAV flight trajectory tracing, or sensing assisted automotive maneuvering and navigation.

703: The terminal determines a target sensing service from the one or more sensing services based on the sensing service information.

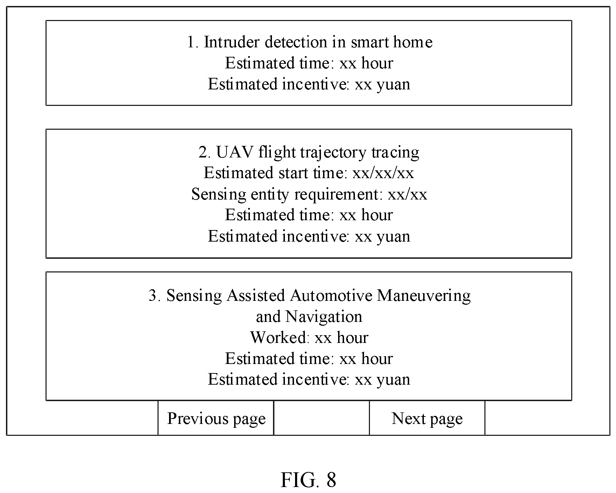

As shown in FIG. 8, after receiving the sensing service information, the terminal displays the sensing service information on an operation interface of the application provided by the AF. After browsing, the user selects the target sensing service from the one or more sensing services on the operation interface. Alternatively, the terminal may determine, by itself, the target sensing service from the one or more sensing services based on a rule predefined by the user.

704: The terminal sends a sensing service participation request to an SSCF.

After determining the target sensing service, the terminal sends the sensing service participation request to the SSCF. The sensing service participation request includes an identifier of the target sensing service, and the terminal requests from the SSCF to participate in the target sensing service by using the sensing service participation request. In an optional manner, the sensing service participation request further includes sensing consent information indicating that the terminal is given consent to serve as an SE, so that the SSCF can directly determine that the terminal is given consent to serve as an SE. After receiving the sensing service participation request, the SSCF orchestrates the terminal as an SE of the target sensing service, and sends, to the terminal, configuration information required by the terminal as the SE of the target sensing service.

In this application, the terminal can obtain the information about the one or more sensing services, select the target sensing service based on the information, and request from the SSCF to serve as the SE of the target sensing service by including the identifier of the target sensing service and the sensing consent information in the sensing service participation request, thereby improving flexibility of participating in the sensing service by the terminal.

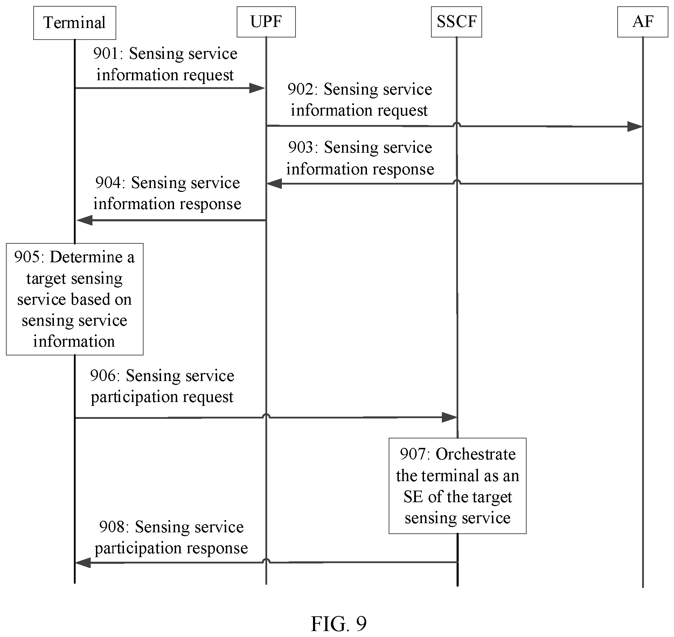

As shown in FIG. 9, another procedure of the method for participating in a sensing service in this application is described in detail below.

901: A terminal sends a sensing service information request to a UPF through a RAN.

The sensing service information request is similar to that described in step 701. Details are not described herein again.

902: The UPF sends the sensing service information request to an AF.

903: The AF sends a sensing service information response to the UPF.

The AF sends the sensing service information response to the UPF for the sensing service information request. The sensing service information response includes sensing service information, and the sensing service information is similar to that described in step 702. Details are not described herein again.

904: The UPF sends the sensing service information response to the terminal through the RAN.

905: The terminal determines a target sensing service based on the sensing service information.

This step is similar to that described in step 703. Details are not described herein again.

906: The terminal sends a sensing service participation request to an SSCF through the RAN.

The sensing service participation request is similar to that described in step 704. Details are not described herein again.

907: The SSCF orchestrates the terminal as an SE of the target sensing service.

908: The SSCF sends a sensing service participation response to the terminal through the RAN.

The sensing service participation response includes configuration information. The configuration information is similar to that described in step 704. Details are not described herein again.

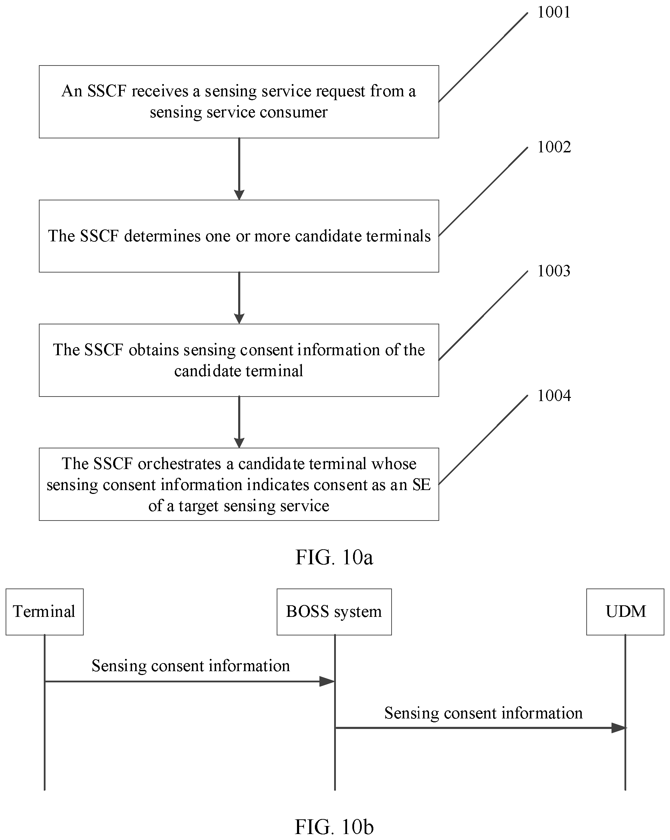

As shown in FIG. 10a, the sensing service orchestration method in this application is described below.

1001: An SSCF receives a sensing service request from a sensing service consumer, where the sensing service request includes identity information of the sensing service consumer, and the sensing service request is used to request the SSCF to provide a service of a target sensing service for the sensing service consumer.

In this embodiment, an AF or a NEF provides an application related to a sensing service. The sensing service consumer in this embodiment is a device that logs in to the application based on the identity information of the sensing service consumer. When a user of the device needs the service of the target sensing service, the user performs an operation on the application, so that the sensing service consumer sends the sensing service request to the AF or the NEF. The sensing service request includes the identity information of the sensing service consumer and an identifier of the target sensing service, and the identity information may be, for example, a user name and a password of the sensing service consumer. Correspondingly, after obtaining the sensing service request, the AF or the NEF sends the sensing service request to the SSCF, to request the SSCF to provide the service of the target sensing service for the sensing service consumer.

After receiving the sensing service request, the SSCF first needs to perform identity authentication on the sensing service consumer. The SSCF sends an authentication information request to an SSSM, and the authentication information request includes the identity information of the sensing service consumer.

The SSSM may perform identity authentication on the user only based on the identity information of the sensing service consumer. For example, the identity information of the sensing service consumer is compared with locally stored identity information, and if the identity information is consistent, the identity authentication passes. Alternatively, in another implementation, the authentication information request may further include the identifier of the target sensing service. The SSSM performs identity authentication on the sensing service consumer based on the identity information of the sensing service consumer and the identifier of the target sensing service, that is, on a basis of verifying whether the identity information is consistent with the locally stored identity information, further determines whether the sensing service consumer has enabled the target sensing service. After completing the identity authentication for the sensing service consumer, the SSSM sends an authentication information response to the SSCF. The authentication information response includes an identity authentication result of the sensing service consumer.

1002: The SSCF determines one or more candidate terminals.

If the identity authentication result is a success, the SSCF needs to orchestrate the target sensing service, for example, select an SE, a configuration, a policy, a transmission manner, and the like of the target sensing service. A manner in which the SSCF selects a terminal as an SE of the target sensing service may be first determining the one or more candidate terminals.

1003: The SSCF obtains sensing consent information of the candidate terminal.

After determining the candidate terminal, the SSCF may obtain the sensing consent information of the candidate terminal in two manners, which are separately described below.

### Manner 1

The SSCF sends an identifier of the candidate terminal to a UDM. The UDM stores the sensing consent information of the candidate terminal. As shown in FIG. 10b, a manner in which the UDM obtains the candidate terminal may be that a user of the candidate terminal writes the sensing consent information of the candidate terminal into the UDM by using a BOSS system when the user registers with an operator, or may be similar to the method described in the embodiment shown in FIG. 4. After receiving the identifier of the candidate terminal, the UDM queries sensing consent information of the candidate terminal locally, and sends the sensing consent information to the SSCF.

### Manner 2

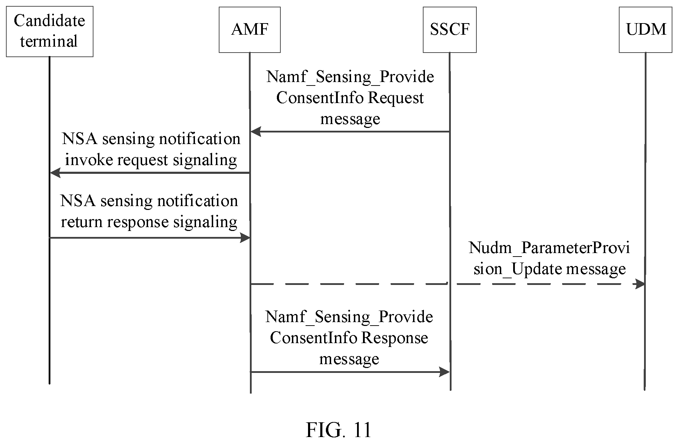

As shown in FIG. 11, the SSCF sends an identifier of the candidate terminal to an AMF by using an Namf_Sensing_ProvideConsentInfo Request message. After receiving the identifier of the candidate terminal, the AMF sends newly added NSA sensing notification invoke request signaling to the candidate terminal through a RAN. After receiving the signaling, the candidate terminal sends newly added NSA sensing notification return response signaling to the AMF through the RAN. The signaling carries the sensing consent information of the candidate terminal. The AMF includes the sensing consent information of the candidate terminal in an Namf_Sensing_ProvideConsentInfo Response message for sending to the SSCF. Based on the foregoing manner, the SSCF can obtain sensing consent information of all the candidate terminals. Optionally, the AMF may alternatively send an Nudm_ParameterProvision_Update message to the UDM, and includes the sensing consent information in the message.

1004: The SSCF orchestrates a candidate terminal whose sensing consent information indicates consent as the SE of the target sensing service.

After obtaining the sensing consent information of the candidate terminal, the SSCF orchestrates the candidate terminal that is given consent to serve as an SE to be the SE of the target sensing service.

Alternatively, the embodiment shown in FIG. 7 may occur before step 1001 of this embodiment or when the SSCF performs orchestration for the target sensing service. If the target sensing service in the embodiment shown in FIG. 7 is the same as the target sensing service requested by the sensing service consumer in this embodiment, the SSCF orchestrates the terminal in the embodiment shown in FIG. 7 as the SE of the target sensing service, and sends the configuration information to the terminal. For details, refer to the foregoing embodiment.

Certainly, in a possible implementation, after receiving the sensing service request, a network device may alternatively perform, by itself, identity authentication on the sensing service consumer based on the identity information of the sensing service consumer in the sensing service request, and if an identity authentication result is a success, send the sensing service request to the SSCF. The sensing service request includes the identifier of the target sensing service, the identity information of the sensing service consumer, and the identity authentication result.

In this application, during sensing service orchestration, the SSCF can obtain the sensing consent information of the terminal, and orchestrate the terminal that is given consent to serve as an SE to be the SE, thereby improving rationality of sensing service orchestration.

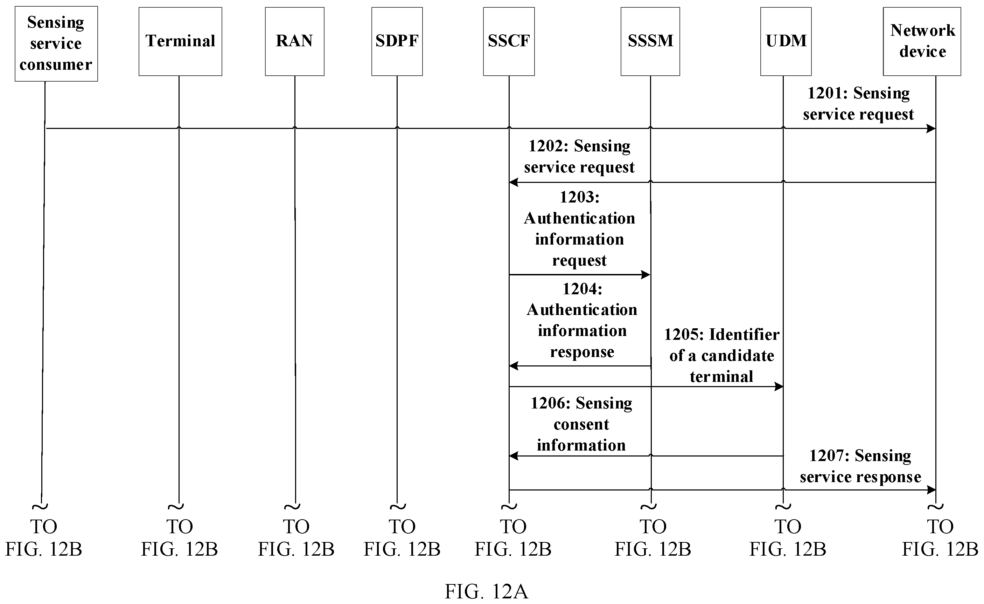

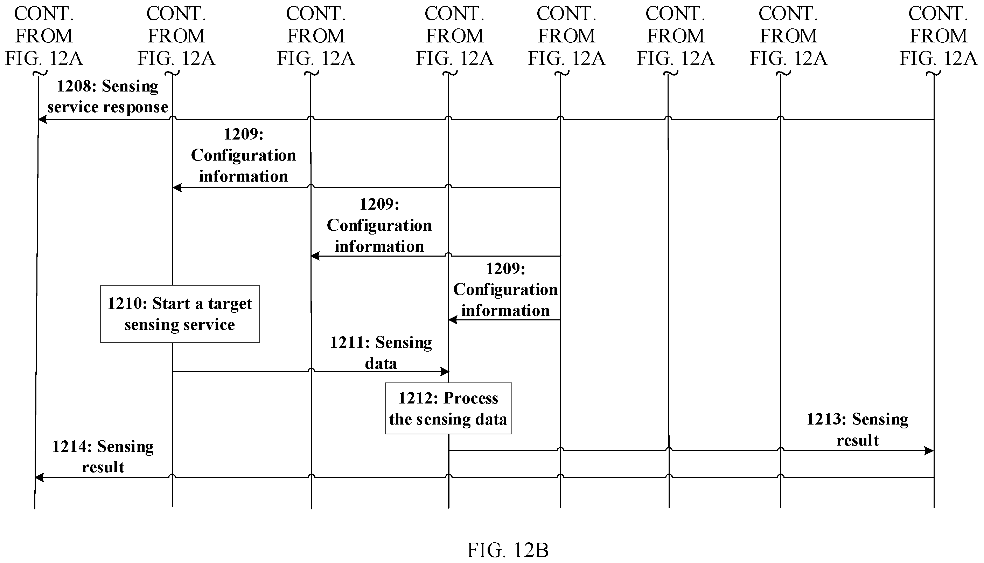

As shown in FIG. 12A and FIG. 12B, another procedure of the authentication method in this application is described below.

1201: A sensing service consumer sends a sensing service request to a network device.

In this embodiment, the network device is an AF or a NEF. This step is similar to that described in step 1001. Details are not described herein again.

1202: The network device sends the sensing service request to an SSCF.

This step is similar to that described in step 1001. Details are not described herein again.

1203: The SSCF sends an authentication information request to an SSSM.

This step is similar to that described in step 1002. Details are not described herein again.

1204: The SSSM sends an authentication information response to the SSCF.

This step is similar to that described in step 1003. Details are not described herein again.

1205: The SSCF sends an identifier of one or more candidate terminals to a UDM.

If an identity authentication result is a success, the SSCF performs orchestration for a target sensing service. The SSCF determines the one or more candidate terminals, and then sends the identifier of the candidate terminal to the UDM.

1206: The UDM sends sensing consent information of the candidate terminal to the SSCF.

The sensing consent information of the terminal is stored on the UDM (for an implementation, refer to the embodiment shown in FIG. 4). Therefore, after receiving the identifier of the candidate terminal, the UDM locally queries the sensing consent information of the candidate terminal, and sends the sensing consent information to the SSCF. The SSCF orchestrates a candidate terminal that is given consent to serve as an SE as an SE of the target sensing service.

1207: The SSCF sends a sensing service response to the network device.

The sensing service response carries DS_ID and Token (for next authentication).

1208: The network device sends the sensing service response to the sensing service consumer.

1209: The SSCF sends configuration information to the SE.

The SSCF sends the configuration information, such as DS_ID, a transmission manner, and an operation instruction, to the SE. The SE includes a terminal, a RAN, an SDPF, and a DSF. It should be understood that the terminal herein is the candidate terminal that is orchestrated as the SE of the target sensing service.

1210: The terminal starts the target sensing service.

It should be understood that the terminal herein is the candidate terminal that is orchestrated as the SE of the target sensing service.

1211: The terminal sends sensing data to the SDPF.

The sensing data may be generated on the terminal, or may be generated on the RAN. The sensing data is uploaded to the SDPF in an uploading manner such as uploading through a DCP.

1212: The SDPF processes the sensing data.

1213: The SDPF sends a sensing result to the network device.

1214: The network device sends the sensing result to the sensing service consumer.

The foregoing describes the methods in this application, and the following describes devices in this application.

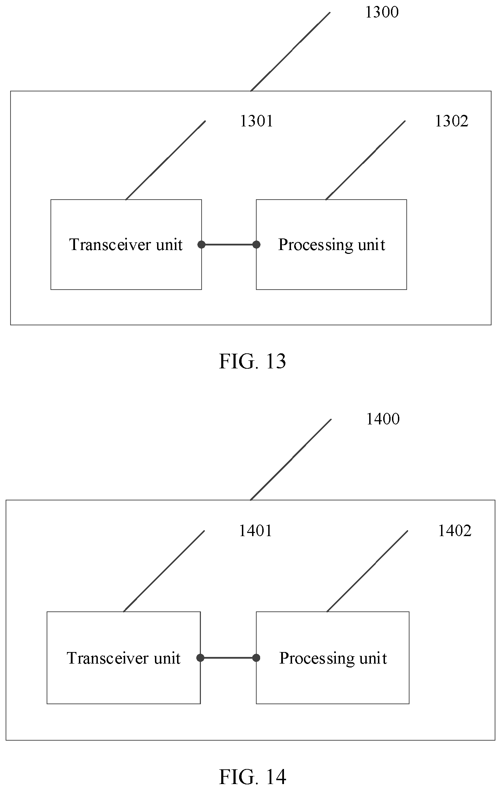

As shown in FIG. 13, an SSCF 1300 in this application includes a transceiver unit 1301 and a processing unit 1302.

The transceiver unit 1301 is configured to receive a sensing service request from a sensing service consumer, where the sensing service request includes identity information of the sensing service consumer and an identifier of a target sensing service, and the sensing service request is used to request the SSCF to provide a service of the target sensing service for the sensing service consumer.

The processing unit 1302 is configured to determine one or more candidate terminals.

The transceiver unit 1301 is further configured to obtain sensing consent information of the candidate terminal, where the sensing consent information indicates whether the candidate terminal is given consent to serve as an SE.

The processing unit 1302 is further configured to orchestrate a candidate terminal whose sensing consent information indicates consent as an SE of the target sensing service.

In a possible implementation,
the transceiver unit 1301 is specifically configured to send an identifier of the one or more candidate terminals to a UDM.

The transceiver unit 1301 is specifically configured to receive sensing consent information of the one or more candidate terminals from the UDM, where the sensing consent information is sent by the candidate terminal to the UDM.

In a possible implementation,
the transceiver unit 1301 is specifically configured to send the identifier of the one or more candidate terminals to an AMF, so that the AMF sends a query instruction to the one or more candidate terminals, where the query instruction is used for the candidate terminal to respond with the sensing consent information to the AMF.

The transceiver unit 1301 is specifically configured to receive the sensing consent information of the one or more candidate terminals from the AMF.

In a possible implementation,
the transceiver unit 1301 is further configured to send an authentication information request to an SSSM, where the authentication information request includes the identity information of the sensing service consumer.

The transceiver unit 1301 is further configured to receive an authentication information response from the SSSM, where the authentication information response includes an identity authentication result, of the sensing service consumer, determined by the SSSM based on the identity information of the sensing service consumer.

The processing unit 1302 is further configured to: if the identity authentication result is a success, trigger an operation of determining the one or more candidate terminals.

In a possible implementation, the authentication information request further includes the identifier of the target sensing service, and the SSSM determines the identity authentication result of the sensing service consumer based on the identity information of the sensing service consumer and the identifier of the target sensing service.

In a possible implementation, a network device is an AF or a NEF.

As shown in FIG. 14, a terminal 1400 in this application includes a transceiver unit 1401 and a processing unit 1402.

The transceiver unit 1401 is configured to send a sensing service information request to an AF.

The transceiver unit 1401 is further configured to receive sensing service information with which the AF responds to the sensing service information request, where the sensing service information includes information about one or more sensing services.

The processing unit 1402 is configured to determine a target sensing service from the one or more sensing services based on the sensing service information.

The transceiver unit 1401 is further configured to send a sensing service participation request to an SSCF, where the sensing service participation request includes an identifier of the target sensing service and sensing consent information, the sensing consent information indicates that the terminal is given consent to serve as an SE, and the sensing service participation request is used for the terminal to request to be orchestrated as an SE of the target sensing service.

In a possible implementation,
the transceiver unit 1401 is further configured to receive response information of the SSCF to the sensing service participation request, where the response information includes configuration information required by the terminal as the SE of the target sensing service.

In a possible implementation,
the processing unit 1402 is specifically configured to display the sensing service information.

The processing unit 1402 is specifically configured to obtain an operation instruction of a user, where the operation instruction is to select the target sensing service.

The processing unit 1402 is specifically configured to determine the target sensing service based on the operation instruction of the user.

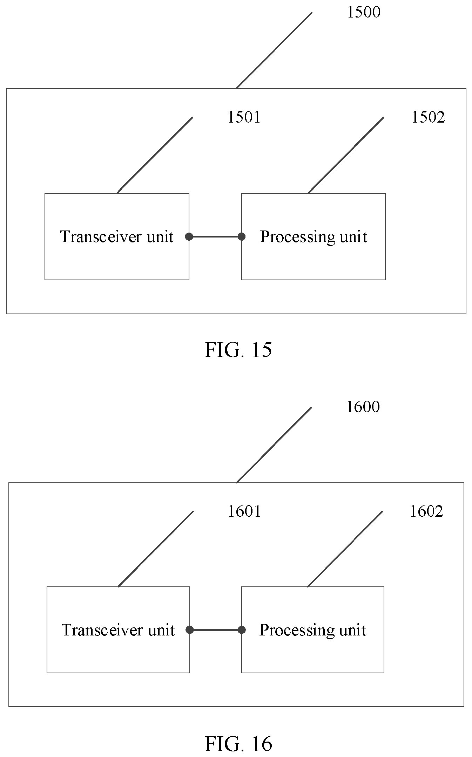

As shown in FIG. 15, an SSCF 1500 in this application includes a transceiver unit 1501 and a processing unit 1502.

The transceiver unit 1501 is configured for the SSCF to receive a sensing service request from a sensing service consumer, where the sensing service request includes identity information of the sensing service consumer and an identifier of a target sensing service, and the sensing service request is used to request the SSCF to provide a service of the target sensing service for the sensing service consumer.

The transceiver unit 1501 is further configured for the SSCF to receive a sensing service participation request from a terminal, where the sensing service participation request includes the identifier of the target sensing service and sensing consent information, the sensing consent information indicates that the terminal is given consent to serve as an SE, and the sensing service participation request is used for the terminal to request to be orchestrated as an SE of the target sensing service.

The processing unit 1502 is further configured for the SSCF to orchestrate the terminal as the SE of the target sensing service.

In a possible implementation,
the transceiver unit 1501 is further configured for an SSSM to send an authentication information request, where the authentication information request includes the identity information of the sensing service consumer.

The transceiver unit 1501 is further configured for the SSCF to receive an authentication information response from the SSSM, where the authentication information response includes an identity authentication result, of the sensing service consumer, determined by the SSSM based on the identity information of the sensing service consumer.

The processing unit 1502 is further configured to: if the identity authentication result is a success, trigger an operation of orchestrating the terminal as the SE of the target sensing service.

In a possible implementation, the authentication information request further includes the identifier of the target sensing service, and the SSSM determines the identity authentication result of the sensing service consumer based on the identity information of the sensing service consumer and the identifier of the target sensing service.

As shown in FIG. 16, a terminal 1600 in this application includes a transceiver unit 1601 and a processing unit 1602.

The processing unit 1602 is configured to obtain an operation instruction of a user, where the operation instruction indicates that a terminal is consented to serve as an SE of a sensing service, or indicates that a terminal is not consented to serve as an SE of a sensing service.

The transceiver unit 1601 is configured to send sensing consent information to a UDM in response to the operation instruction, where corresponding to the operation instruction, the sensing consent information indicates that the terminal is given consent to serve as the SE of the sensing service, or indicates that the terminal is not given consent to serve as the SE of the sensing service.

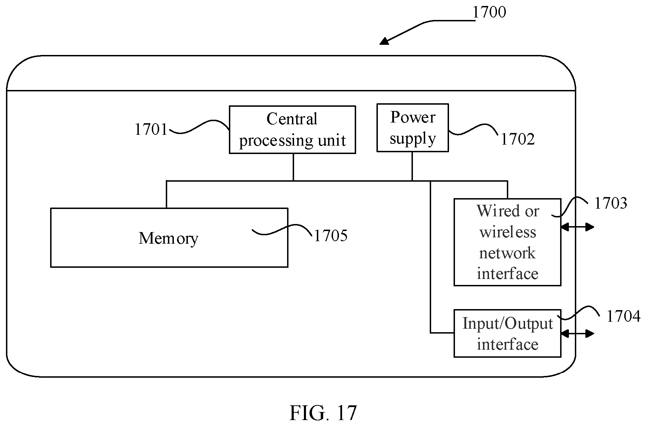

FIG. 17 is a diagram of a structure of a device according to this application. The device is configured to implement the method performed by the terminal or the SSCF in the foregoing embodiments. A device 1700 may include one or more central processing units (central processing units, CPU) 1701 and a memory 1705. The memory 1705 stores one or more applications or data.

The memory 1705 may be volatile storage or persistent storage. The program stored in the memory 1705 may include one or more modules, and each module may include a series of instruction operations on a server. Further, the central processing unit 1701 may be configured to communicate with the memory 1705, and perform the series of instruction operations in the memory 1705 on the device 1700. The device 1700 may further include one or more power supplies 1702, one or more wired or wireless network interfaces 1703, one or more input/output interfaces 1704, and/or one or more operating systems.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A sensing service orchestration method, comprising:
receiving, by a sensing service control function, a sensing service request from a sensing service consumer, wherein the sensing service request comprises identity information of the sensing service consumer and an identifier of a target sensing service, and the sensing service request is used to request the sensing service control function to provide a service of the target sensing service for the sensing service consumer;
determining, by the sensing service control function, one or more candidate terminals;
obtaining, by the sensing service control function, sensing consent information of the candidate terminal, wherein the sensing consent information indicates whether the candidate terminal is given consent to serve as a sensing entity; and
orchestrating, by the sensing service control function, the candidate terminal whose sensing consent information indicates consent as a sensing entity of the target sensing service.

2. The method according to claim 1, wherein obtaining, by the sensing service control function, the sensing consent information of the candidate terminal comprises:
sending, by the sensing service control function, an identifier of the one or more candidate terminals to a user data management; and
receiving, by the sensing service control function, the sensing consent information of the one or more candidate terminals from the user data management, wherein the sensing consent information is sent by the candidate terminal to the user data management.

3. The method according to claim 1, wherein obtaining, by the sensing service control function, the sensing consent information of the candidate terminal comprises:
sending, by the sensing service control function, an identifier of the one or more candidate terminals to an access and mobility management function, so that the mobility management function sends a query instruction to the one or more candidate terminals, wherein the query instruction is used for the candidate terminal to respond with the sensing consent information to the mobility management function; and
receiving, by the sensing service control function, the sensing consent information of the one or more candidate terminals from the mobility management function.

4. The method according to any one of claims 1 to 3, wherein the method further comprises:
sending, by the sensing service control function, an authentication information request to a sensing service subscriber management, wherein the authentication information request comprises the identity information of the sensing service consumer;
receiving, by the sensing service control function, an authentication information response from the sensing service subscriber management, wherein the authentication information response comprises an identity authentication result, of the sensing service consumer, determined by the sensing service subscriber management based on the identity information of the sensing service consumer; and
if the identity authentication result is a success, triggering, by the sensing service control function, an operation of determining the one or more candidate terminals.

5. The method according to claim 4, wherein the authentication information request further comprises the identifier of the target sensing service, and the sensing service subscriber management determines the identity authentication result of the sensing service consumer based on the identity information of the sensing service consumer and the identifier of the target sensing service.

6. A method for requesting to become a sensing entity, comprising:
sending, by a terminal, a sensing service information request to an application function AF;
receiving, by the terminal, sensing service information with which the AF responds to the sensing service information request, wherein the sensing service information comprises information about one or more sensing services;
determining, by the terminal, a target sensing service from the one or more sensing services based on the sensing service information; and
sending, by the terminal, a sensing service participation request to a sensing service control function, wherein the sensing service participation request comprises an identifier of the target sensing service and sensing consent information, the sensing consent information indicates that the terminal is given consent to serve as a sensing entity, and the sensing service participation request is used for the terminal to request to be orchestrated as a sensing entity of the target sensing service.

7. The method according to claim 6, wherein the method further comprises:
receiving, by the terminal, response information of the sensing service control function to the sensing service participation request, wherein the response information comprises configuration information required by the terminal as the sensing entity of the target sensing service.

8. The method according to claim 6 or 7, wherein determining, by the terminal, the target sensing service from the one or more sensing services based on the sensing service information comprises:
displaying, by the terminal, the sensing service information;
obtaining, by the terminal, an operation instruction of a user, wherein the operation instruction is to select the target sensing service; and
determining, by the terminal, the target sensing service based on the operation instruction of the user.

9. A sensing service orchestration method, comprising:
receiving, by a sensing service control function, a sensing service request from a sensing service consumer, wherein the sensing service request comprises identity information of the sensing service consumer and an identifier of a target sensing service, and the sensing service request is used to request the sensing service control function to provide a service of the target sensing service for the sensing service consumer;
receiving, by the sensing service control function, a sensing service participation request from a terminal, wherein the sensing service participation request comprises the identifier of the target sensing service and sensing consent information, the sensing consent information indicates that the terminal is given consent to serve as a sensing entity, and the sensing service participation request is used for the terminal to request to be orchestrated as a sensing entity of the target sensing service; and
orchestrating, by the sensing service control function, the terminal as the sensing entity of the target sensing service.

10. The method according to claim 9, wherein the method further comprises:
sending, by the sensing service control function, an authentication information request to a sensing service subscriber management, wherein the authentication information request comprises the identity information of the sensing service consumer;
receiving, by the sensing service control function, an authentication information response from the sensing service subscriber management, wherein the authentication information response comprises an identity authentication result, of the sensing service consumer, determined by the sensing service subscriber management based on the identity information of the sensing service consumer; and
if the identity authentication result is a success, triggering, by the sensing service control function, an operation of orchestrating the terminal as the sensing entity of the target sensing service.

11. The method according to claim 10, wherein the authentication information request further comprises the identifier of the target sensing service, and the sensing service subscriber management determines the identity authentication result of the sensing service consumer based on the identity information of the sensing service consumer and the identifier of the target sensing service.

12. A method for obtaining consent information, comprising:
obtaining, by a terminal, an operation instruction of a user, wherein the operation instruction indicates that the terminal is consented to serve as a sensing entity of a sensing service, or indicates that the terminal is not consented to serve as the sensing entity of the sensing service; and
sending, by the terminal, sensing consent information to a user data management in response to the operation instruction, wherein corresponding to the operation instruction, the sensing consent information indicates that the terminal is given consent to serve as the sensing entity of the sensing service, or indicates that the terminal is not given consent to serve as the sensing entity of the sensing service.

13. The method according to claim 12, wherein sending, by the terminal, the sensing consent information to the user data management comprises:
sending, by the terminal, the sensing consent information to a mobility management function, so that the mobility management function sends an Nudm_UECM_Update message to the user data management, wherein the Nudm_UECM_Update message comprises the sensing consent information.

14. A communication apparatus, comprising a functional unit configured to perform the method according to any one of claims 1 to 5 or claims 9 to 11.

15. A communication apparatus, comprising a processor and a memory, wherein the processor is coupled to the memory, the memory is configured to store instructions, and when the instructions are executed by the processor, the communication apparatus is enabled to perform the method according to any one of claims 1 to 5 or claims 9 to 11.

16. A terminal, comprising a functional unit configured to perform the method according to any one of claims 6 to 8 or claims 12 and 13.

17. A terminal, comprising a processor and a memory, wherein the processor is coupled to the memory, the memory is configured to store instructions, and when the instructions are executed by the processor, the terminal is enabled to perform the method according to any one of claims 6 to 8 or claims 12 and 13.

18. A computer-readable storage medium, wherein the computer-readable storage medium stores instructions, and when a computer executes the instructions, the computer performs the method according to any one of claims 1 to 13.

19. A computer program product, wherein the computer program product comprises computer-readable instructions, and when the computer-readable instructions are executed by a processor, the method according to any one of claims 1 to 13 is implemented.
